# EUROPÄISCHE PATENTSCHRIFT

(11) **EP 0 450 301 B1**
(45) Veröffentlichungstag und Bekanntmachung des Hinweises auf die Patenterteilung: **16.06.1993**
(21) Anmeldenummer: 91102641.7
(22) Anmeldetag: 22.02.1991
(51) Int. Cl.: B60Q 11/00, B60Q 1/30

(54) **Verfahren und Vorrichtung zur Überwachung von Fahrtrichtungsanzeige-Blinklampen eines Fahrzeuganhängers**
Device for monitoring the direction indicator on a towed vehicle
Procédé et dispositif de surveillance des feux indicateurs de direction pour une remorque de véhicule

(30) Priorität: 04.04.1990 DE 4010765
(43) Veröffentlichungstag der Anmeldung: 09.10.1991
(73) Patentinhaber: MERCEDES-BENZ AG, 70327 Stuttgart (DE)
(72) Erfinder: Dietz, Jürgen, W-7056 Weinstadt 1 (DE); Bräunig, Dieter, W-7000 Stuttgart 1 (DE)

(56) Entgegenhaltungen:
- DE-A- 2 448 410
- FR-A- 2 199 702
- US-A- 3 955 174
- US-A- 4 207 553

## Beschreibung

Die Erfindung bezieht sich auf ein verfahren zur Überwachung von Fahrtrichtungsanzeige-Blinklampen eines Fahrzeuganhängers (im folgenden kurz Anhänger-Blinklampen) mit den Merkmalen des Oberbegriffs des Patentanspruchs 1 und auf eine Vorrichtung, die insbesondere zur Durchführung des erfindungsgemäßen Verfahrens geeignet ist.

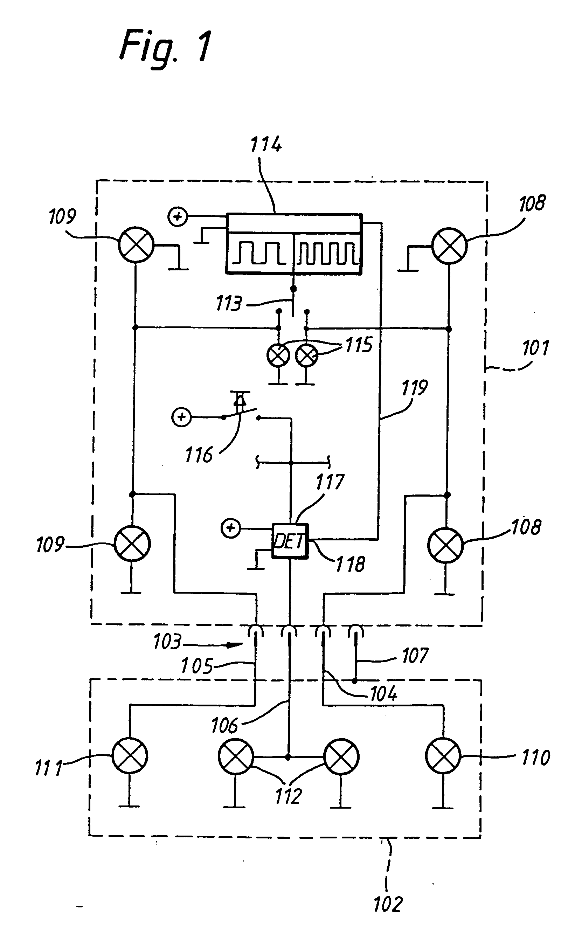

Eine gattungsgemäße Vorrichtung mit den Merkmalen des Oberbegriffs des Vorrichtungsanspruchs 2 ist durch Benutzung in von der Anmelderin hergestellten Fahrzeugen mit Anhängerkupplung und elektrischer Anhängersteckverbindung bekannt (s. auch Figur 1). Aus der Arbeitsweise dieser Vorrichtung sind die Gattungsmerkmale des Verfahrensanspruchs 1 herleitbar.

Bei serienmäßigem Einbau der bekannten Vorrichtung ist die Nennlast eines Blinktaktgebers, dessen Taktfrequenz in Abhängigkeit von der wirksamen Last veränderlich ist, durch eine Erfassungseinrichtung auf Anhängerbetrieb - = zusätzliche Blinklampen sind zu steuern und zu überwachen - umschaltbar, die elektrisch erfaßt, ob ein Anhänger elektrisch angeschlossen ist oder nicht. Die Anhänger-Blinklampen bilden dann einen Teil der wirksamen elektrischen Last des Blinktaktgebers, so daß auch der Ausfall einer Blinklampe im Anhänger durch signifikante Frequenzänderung des Taktgebers immanent signalisiert wird, wodurch eine von der Erfassungseinrichtung elektrisch steuerbare elektrische Schalteinrichtung zur automatischen Umschaltung der vom Blinktaktgeber erzeugten Frequenz bei Ausfall einer der angeschlossenen Blinklampen des Anhängers gebildet ist.
Notwendige Voraussetzung ist darin aber, daß wenigstens eine Signalleitung von der Erfassungeinrichtung zum Blinktaktgeber verlegt wird, über die ein eindeutiges Erfassungssignal zur Umschaltung der Nennlast des Blinktaktgebers geleitet wird. Die Erfassungseinrichtung ist in den Bremslichtstrompfad zum Anhänger eingeschleift und erfaßt bereits beim elektrischen Anschluß des mit mindestens zwei Bremslichtern versehenen Anhängers an das Zugfahrzeug das unterschiedliche Potentialgefälle "potentialfrei" bzw. "Stromkreis über Bremslichter an Masse". Derartige Erfassungseinrichtungen sind auch anderweitig bekannt (DE 35 22 481 C1, DE 30 38 464 C2).

Da eine automatische Überwachung der Anhänger-Blinklampen gesetzlich vorgeschrieben ist, muß die erwähnte Signalleitung bisher auch bei nachträglichem Einbau einer Anhängevorrichtung von der dann neu eingebauten Erfassungseinrichtung zum vorhandenen Blinktaktgeber verlegt werden, damit dieser, wie erwähnt, auf Anhängerbetrieb umgeschaltet werden kann - mit großem Zeitaufwand, weil sich der Blinktaktgeber aus Fertigungsgründen im vorderen Teil des Fahrzeugs befindet, während die Erfassungseinrichtung in den der mechanischen Anhängevorrichtung näheren hinteren Teil des Fahrzeugs eingebaut wird.

Es sind auch andere, gattungsfremde Überwachungsschaltungen für die Blinkanlage von Zugfahrzeug und Anhänger bekannt (DE 27 53 528 A1, DE 36 22 567 A1).
Die erstgenannte Druckschrift offenbart eine Vorrichtung, die sowohl das Vorhandensein eines elektrisch angeschlossenen Anhängers als auch die Funktion der Blinklampen dieses Anhängers mittels einer in unterschiedlichen Betriebsmodi einschaltbaren Kontrollampe anzeigt, ohne daß jedoch die Frequenz des Blinktaktgebers verändert wird.

Die zweitgenannte Druckschrift beschreibt eine Vorrichtung, durch die bei Ausfall einer Blinklampe des Zugfahrzeugs oder des Anhängers eine sonst bei eingeschaltetem Fahrtrichtungssignal eingeschaltete Kontrollampe nicht aufleuchtet.
In einer dritten bekannten Kontrolleinrichtung für die Blinklichtsignalanlage von Kraftfahrzeugen (DE 35 31 560 C2) sind zwei Kontrollampen vorgesehen, deren eine einen Ausfall einer Zugfahrzeug-Blinklampe und deren andere einen Ausfall einer Anhänger-Blinklampe anzeigt.

Die Erfindung hat die Aufgabe,
- ein Verfahren zur Überwachung von Fahrtrichtungsanzeige-Blinklampen eines Fahrzeuganhängers anzugeben, welches den Verzicht auf eine Nennlastumschaltung des Blinktaktgebers (auf Anhängerbetrieb) unter Beibehaltung der Erzeugung eines immanenten Ausfallsignals durch Taktfrequenzumschaltung des Blinktaktgebers ermöglicht, und
- eine gattungsgemäße Vorrichtung insbesondere zur Durchführung des erfindungsgemäßen Verfahrens so auszubilden, daß der nachträgliche Einbau des elektrischen Teils einer Anhängevorrichtung in ein Zugfahrzeug vereinfacht werden kann.

Die erste Teilaufgabe wird mit den Merkmalen des Verfahrensanspruchs 1 erfindungsgemäß gelöst.

Das durch die Schritte
- Betrieb der Anhänger-Blinklampen über eine mit der Frequenz des Blinktaktgebers getaktete Hilfsschalteinrichtung, wobei die Anhänger-Blinklampen Last einer getrennten Spannungsversorgung sind,
- Erzeugung eines Fehlerschaltsignals bei elektrischer Erfassung des Ausfalls einer der nicht an die elektrische Last des Blinktaktgebers angeschlossenen Blinklampen des elektrisch angeschlossenen Anhängers und eingeschaltetem Fahrtrichtungssignalschalter durch eine Anhänger-Blinklampen-Überwachungsschaltung,
- elektrische Abtrennung wenigstens einer Blinklampe des Zugfahrzeugs von der elektrischen Last des Blinktaktgebers bei vorliegendem Fehlerschaltsignal der Überwachungsschaltung
   zur Simulation einer Abweichung der elektrischen Last des Blinktaktgebers von der Nennlast,
- Hilfsbetrieb der abgetrennten Blinklampe des Zugfahrzeugs mittels der Hilfsschalteinrichtung.

gekennzeichnete Verfahren simuliert bei Ausfall einer der Anhänger-Blinklampen einen Ausfall einer Zugfahrzeug-Blinklampedie selbstverständlich auf derselben Gespannseite wie die ausgefallene Anhänger-Blinklampe liegt - und damit eine Laständerung am Blinktaktgeber, aufgrund deren dieser auch dann eine signifikant von der Normalblinkfrequenz abweichende Frequenz erzeugt, wenn die Anhänger-Blinklampen nicht Teil seiner elektrischen Nennlast sind. Eine Umschaltung des Blinktaktgebers auf Anhängerbetrieb mit erhöhter Nennlast erübrigt sich damit. Weil die abgetrennte Zugfahrzeug-Blinklampe tatsächlich aber intakt ist, kann sie über dieselbe Hilfsschalteinrichtung weiter betrieben werden, welche die Anhänger-Blinklampen taktet, und zwar mit der bei Ausfall einer Blinklampe des Zugfahrzeugs vorgesehenen und automatisch eingeschalteten Frequenz des Blinktaktgebers. Der Fahrzeugbenutzer, der nach der Fehlerquelle sucht, kann daher bei eingeschaltetem Fahrtrichtungssignalschalter eindeutig den Ausfall der Anhänger-Blinklampe erkennen.

Der erwähnten Zulassungsvorschrift ist damit genügt.

Es sei noch angemerkt, daß der Ausdruck "getrennte" Spannungsversorgung hier gewählt wurde, um mit positiver Formulierung klarzustellen, daß die Anhänger-Blinklampen nicht Last des Blinktaktgebers sind; es ist damit jedoch nur gemeint, daß ein eigener Plusanschluß für die Anhänger-Blinklampen vorgesehen wird und nicht, daß eine von der Bordspannungsquelle (Akkumulator) unabhängige Spannungsversorgung oder -quelle vorgesehen werden muß.

Die zweite Teilaufgabe wird mit den Merkmalen des Vorrichtungsanspruchs 2 erfindungsgemäß gelöst.

Die kennzeichnenden Merkmale der Unteransprüche offenbaren vorteilhafte Weiterbildungen der erfindungsgemäßen Vorrichtung.

In sehr einfacher Weise läßt sich die elektrische Abtrennung der besagten Zugfahrzeug-Blinklampe von der elektrischen Last des Blinktaktgebers durch einen in den Strompfad zwischen dem Blinktaktgeber und dieser Blinklampe eingeschleiften Öffnerkontakt eines Relais schalten, welches von der Schalteinrichtung gesteuert wird.
Vorteilhaft hat dieses Relais auch einen gleichzeitig mit dem Öffnerkontakt betätigten Schließkontakt, der die abgetrennte Blinklampe unmittelbar nach dem Abtrennen mit der getakteten Hilfsschalteinrichtung verbindet.
Natürlich kann das Relais auch nur einen einfachen Wechselschaltkontakt haben, der die nachgeschaltete Blinklampe wechselweise mit dem Blinktaktgeber oder mit der Hilfsschalteinrichtung verbindet.

Die Hilfsschalteinrichtung kann in vorteilhafter Weise ein weiteres Relais enthalten, welches von dem Blinktaktgeber selbst getaktet wird - wobei Vorkehrungen getroffen sind, daß die elektrische Last dieses Relais keine Frequenzumschaltung bewirkt - und welches mit seinem Schließkontakt die abgetrennte Blinklampe intermittierend an eine eigene Spannungsversorgung anschließt.

Weitere Einzelheiten und Vorteile gehen aus der Zeichnung eines Ausführungsbeispiels und deren sich hier anschließender eingehender Beschreibung hervor.

Es zeigen
- Figur 1: einen vereinfachten Schaltplan einer **gattungsgemäßen** Vorrichtung und
- Figur 2: einen schematischen Schaltplan einer erfindungsgemäßen Vorrichtung.

Vorab sei angemerkt, daß die dreiziffrigen Bezugszeichen in der ersten Stelle die Figurennummer enthalten, so daß eine einwandfreie Unterscheidung bzw. Zuordnung möglich ist. Soweit möglich stimmen die beiden letzten Ziffern der Bezugszahlen bei in beiden Figuren vorgesehenen und einander entsprechenden Bauteilen überein.

In **Figur 1 (Stand der Technik)** ist ein Zugfahrzeug 101 mit einem Anhänger 102 in nicht dargestellter Weise mechanisch und über eine übliche mehrpolige Steckverbindung 103 elektrisch gekuppelt. Von der Steckverbindung 103 sind nur zwei Blinklampenleitungen 104 und 105, eine Bremslichtleitung 106 und eine Masseleitung 107 dagestellt; selbstverständlich sind noch weitere Leitungen für Begrenzungslampen etc. vorgesehen, die hier aber nicht wesentlich sind.
Das Zugfahrzeug 101 hat zwei rechte Blinklampen 108 und zwei linke Blinklampen 109; der Anhänger hat je eine rechte Blinklampe 110 (Anschluß über Blinklampenleitung 104 parallel zu den Blinklampen 108) und eine linke Blinklampe 111 (Anschluß über Blinklampenleitung 105 parallel zu den Blinklampen 109) sowie zwei parallel geschaltete Bremslichter 112. Sämtliche Lampen liegen einseitig an Masse.
Mittels eines üblichen manuell schaltbaren Wechselschalters 113 (Fahrtrichtungssignalschalter) mit neutraler Mittelstellung können wahlweise die rechten oder linken Blinklampen von Zugfahrzeug 101 und Anhänger 102 an den Taktausgang eines Blinktaktgebers 114 angeschlossen werden. Die Anhänger-Blinklampen 110 und 111 bilden in dieser Schaltung einen Teil der elektrischen Last des Blinktaktgebers 114. Dieser kann abhängig von der angeschalteten Last, sprich von der Anzahl der Blinklampen, zwei unterschiedliche Taktfrequenzen erzeugen, wie symbolisch angedeutet, wobei eine niedrigere Frequenz bei intakten Blinklampen - also Nennlast bzw. Nennstromaufnahme durch die Blinklampen - und eine signifikant höhere Frequenz bei Ausfall einer oder mehrerer Blinklampen erzeugt wird.
Die im Vergleich zum Normalbetrieb höhere Blinkfrequenz fällt dann dem Fahrzeugbenutzer zumindest durch das ungewohnt schnellere Blinken einer von zwei parallel zu den Blinklampen geschalteten Kontrollampen 115 als immanentes Fehler-/Lampenausfallsignal auf. Selbstverständlich kann auch eine akustische Signalquelle vorgesehen werden.
Über einen Bremslichtschalter 116 werden die Bremslichter 112 des Anhängers 102 ebenso wie die nicht dargestellten Bremslichter des Zugfahrzeugs 101 eingeschaltet.
In die Verbindung zwischen dem Bremslichtschalter 116 und den Bremslichtern 112 des Anhängers 102 ist eine Anhänger-Erfassungseinrichtung 117 eingeschleift, an deren Ausgang 118 eine Signalleitung 119 zum Blinktaktgeber 114 angeschlossen ist. Die Erfassungseinrichtung 117, die eine eigene Spannungsversorgung aufweist, unterscheidet unabhängig vom Einschaltzustand der Bremslichter 112 zwischen den Zuständen "potentialfrei" und "über Bremslichter 112 an Masse" auf der Leitung 106; im letzteren Fall setzt sie den Pegel auf der Leitung 119 von "LOW" auf "HIGH" und signalisiert dem Blinktaktgeber 114 durch dieses Erkennungssignal, daß der Anhänger 102 elektrisch angeschlossen ist.
Dieses Signal bewirkt eine interne Umschaltung im Blinktaktgeber 114 auf Anhängerbetrieb, in welchem die Nennlast höher als bei reinem Zugfahrzeugbetrieb ist. Ein Ausfall einer der Blinklampen des Zugfahrzeugs oder des Anhängers führt dann ebenfalls zur Umschaltung des Blinktaktgebers 114 auf Erzeugung der höheren Frequenz.

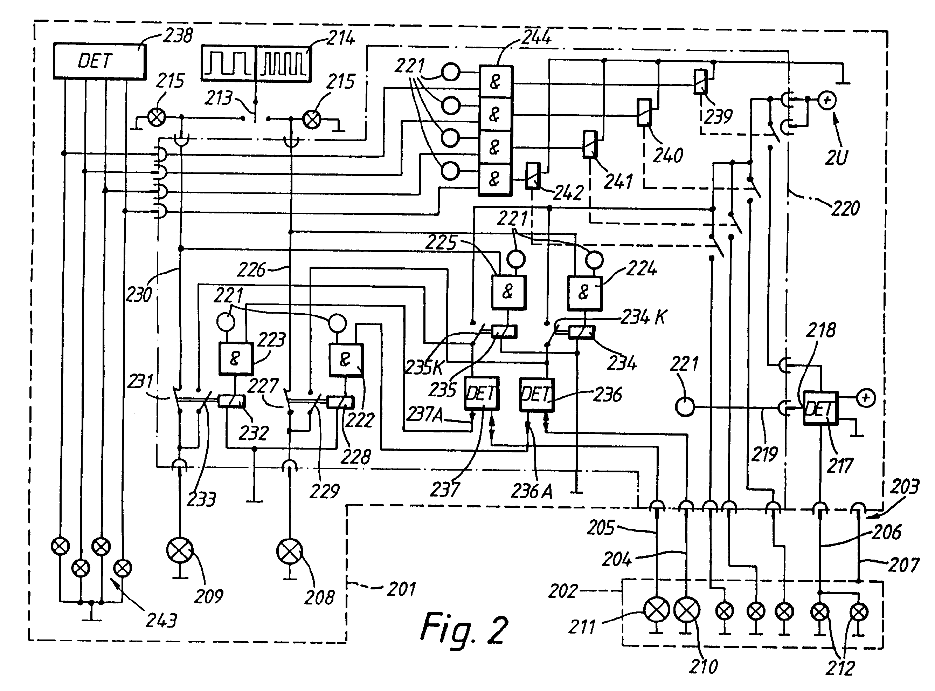

Demgegenüber ist gemäß dem Schaltplan in **Figur 2** in einem Zugfahrzeug 201, das mit einem Anhänger 202 in nicht dargestellter Weise mechanisch und über eine übliche mehrpolige Steckverbindung 203 elektrisch gekuppelt ist, eine gemaß der Erfindung aufgebaute Schalteinrichtung 220 vorgesehen.
In dieser Figur sind zu deren Vereinfachung nur eine rechte hintere Blinklampe 208 und eine linke hintere Blinklampe 209 des Zugfahrzeugs 201 dargestellt; die vorderen Blinklampen wurden weggelassen. Die Blinklampen 208 und 209 sind wie in Figur 1 wahlweise über einen manuell schaltbaren Wechselschalter 213 (Fahrtrichtungssignalschalter) mit neutraler Mittelstellung an den Taktausgang eines Blinktaktgebers 214 anschließbar. Je eine Kontrollampe 215 ist an einen rechten Blinklampenstrompfad 226 bzw. linken Blinklampenstrompfad 230 angeschlossen.
Es versteht sich, daß die gezeigte Verschaltung des Wechselschalters 213, in der er die Lampenlast zu schalten hat, nicht die einzige Möglichkeit ist. Es können auch in bekannter Weise Relais oder elektronische Schaltmittel zur Entlastung der Kontakte des Wechselschalters vorgesehen werden. Insbesondere erzeugen getaktete Relais eine auch noch bei Ausfall einer der Kontrollampen wahrnehmbare Zustandskontrolle.
Der Blinktaktgeber 214 ist zwar wie in Figur 1 zur Erzeugung zweier unterschiedlicher Frequenzen vorgesehen, wobei wiederum eine niedrigere Frequenz bei intakten Blinklampen - also Nennlast bzw. Nennstromaufnahme durch die Blinklampen - und eine höhere Frequenz bei Ausfall einer oder mehrerer Blinklampen erzeugt wird, und dient damit auch der direkten Funktionsüberwachung der Zugfahrzeug-Blinklampen 208 und 209 sowie der nicht dargestellten vorderen Blinklampen.
Jedoch ist es gemäß der Erfindung nicht mehr notwendig, den Blinktaktgeber 214 auf Anhängerbetrieb umzuschalten. Entsprechend ist trotz im Ergebnis gleicher Funktionsweise wie bei der Anordnung nach Figur 1 auch keine Signalleitung zwischen diesem Blinktaktgeber 214 und einer Anhänger-Erfassungseinrichtung 217 mehr vorgesehen.
Letztere erfaßt zwar den elektrischen Anschluß des Anhängers ebenfalls über einen Bremslichtstrompfad 206, analog wie zu Figur 1 (Erfassungseinrichtung 117) beschrieben.
Jedoch ist ein Signalausgang 218 der Erfassungseinrichtung 217 mit einem Knoten 221, der durch einen Kreis dargestellt ist, verbunden. Diesem wird das Erkennungssignal "Anhänger elektrisch angeschlossen" aufgeschaltet.
An den Knoten 221 sind innerhalb der Schalteinrichtung 220 Eingänge von UND-Gattern 222, 223, 224 und 225 angeschlossen, deren Funktion noch beschrieben wird, wobei an diesen Eingängen zur Vereinfachung der Figur 2 ebenfalls Kreise 221 gezeichnet sind, die die elektrischen Verbindungen zum Knoten 221 symbolisieren. Mit dieser Darstellung wird augenfällig, daß ein Anhänger elektrisch angeschlossen und durch die Erfassungseinrichtung 217 elektrisch erfaßt sein muß, um die UND-Gatter 222 bis 225 durchzuschalten bzw. deren Ausgangspegel auf "HIGH" zu setzen. Natürlich ist die ordnungsgemäße Funktion wenigstens eines der beiden Bremslichter Voraussetzung für die Erzeugung des Erkennungssignals.
Die notwendigen Spannungsversorgungen der UND-Gatter sind der Übersichtlichkeit halber nicht dargestellt.
Es versteht sich, daß das Erkennungssignal "Anhänger angeschlossen" innerhalb der Schalteinrichtung 220 auch in anderer Weise logisch verarbeitet werden kann; die gezeigten UND-Gatter sind nur eine besonders einfache und vorteilhafte Darstellung von vielen äquivalenten Möglichkeiten. Z. B. kann auch mit negativer Schaltlogik gearbeitet werden.
In den Strompfad 226 vom rechten Festkontakt des Wechselschalters 213 zur rechten Blinklampe 208 ist ein Ruhe- bzw. Öffnerkontakt 227 eines Relais 228 eingeschleift, welches neben dem Öffnerkontakt 227 auch einen Schließkontakt 229 schalten kann. Das Relais 228 ist an den Ausgang des UND-Gatters 222 angeschlossen und wird aktiviert, wenn dessen Ausgangspegel auf "HIGH" geschaltet wird.
In den Strompfad 230 vom linken Festkontakt des Wechselschalters 213 zur linken Blinklampe 209 ist ein Ruhe- bzw. Öffnerkontakt 231 eines Relais 232 eingeschleift, welches neben dem Öffnerkontakt 231 auch einen Schließkontakt 233 schalten kann. Das Relais 231 ist an den Ausgang des UND-Gatters 223 angeschlossen und wird aktiviert, wenn dessen Ausgangspegel auf "HIGH" geschaltet wird.
An den Strompfad 226 vom rechten Festkontakt des Wechselschalters 213 zur rechten Blinklampe 208 ist ein hochohmiger zweiter Eingang des UND-Gatters 224 angeschlossen.
An den Strompfad 230 vom linken Festkontakt des Wechselschalters 213 zur linken Blinklampe 209 ist ein hochohmiger zweiter Eingang des UND-Gatters 225 angeschlossen.
Die elektrische Belastung des Blinktaktgebers 214 durch die UND-Gatter 224 und 225 ist wegen deren hochohmiger Eingänge vernachlässigbar gegenüber den Blinklampen 208 und 209.
An den Ausgang des UND-Gatters 224 ist ein Relais 234 mit einem Schließkontakt 234K angeschlossen, der einerseits mit dem Pluspol einer Spannungsversorgung 2U und andererseits mit einer Überwachungsschaltung 236 sowie mit dem Schließkontakt 229 des Relais 228 verbunden ist.
Über die in nicht dargestellter Weise an den vorhandenen Akkumulator des Zugfahrzeugs angeschlossene Spannungsversorgung 2U ist auch die Schalteinrichtung 220 selbst an die Bordspannung des Zugfahrzeugs 201 angeschlossen.
An den Ausgang des UND-Gatters 225 ist ein Relais 235 mit einem Schließkontakt 235K angeschlossen, der einerseits mit dem Pluspol einer Spannungsversorgung 2U und andererseits mit einer Überwachungsschaltung 237 sowie mit dem Schließkontakt 233 des Relais 232 verbunden ist.

An einen ersten Ausgang der Überwachungsschaltung 236 ist eine Leitung 204 zur rechten Blinklampe 210 des Anhängers 202 angeschlossen, an einen ersten Ausgang der Überwachungsschaltung 237 ist eine Leitung 205 zur rechten Blinklampe 211 des Anhängers 202 angeschlossen.
Ein zweiter Ausgang 236A der Überwachungsschaltung 236 ist mit dem zweiten Eingang des UND-Gatters 222 verbunden, ein zweiter Ausgang 237A der Überwachungsschaltung 237 ist mit dem zweiten Eingang des UND-Gatters 223 verbunden.
Ersichtlich sind die Anhänger-Blinklampen von der elektrischen Last des Blinktaktgebers 214 getrennt; sie belasten nur die Spannungsversorgung 2U und werden nur mittelbar durch den Wechselschalter 213 über die Schalteinrichtung 220 geschaltet.

Da jeweils eines der UND-Gatter 224 und 225 bei angeschlossenem Anhänger (Erkennungssignal bzw. Schaltknoten 221 "HIGH") und Einschalten des Wechselschalters 213 intermittierend durchgeschaltet wird, werden die Überwachungsschaltungen 236 und 237, die jeweils über eine eigene, nicht dargestellte Spannungsversorgung innerhalb der Schalteinrichtung 220 verfügen, über ihren Eingang intermittierend angesteuert; sie geben im Normalfall die - durch die vom Blinktaktgeber 214 erzeugte Frequenz vorgegebenen - Taktimpulse über ihren ersten Ausgang und die daran jeweils angeschlossene Leitung 204 bzw. 205 an die Anhänger-Blinklampen 210 bzw. 211 weiter.
Jedoch erfassen sie zusätzlich einen etwaigen Ausfall der ihnen jeweils nachgeschalteten Blinklampe 210 bzw. 211, weil dann kein Strom über die Leitung 204 bzw. 205 fließt; in einem solchen Fall setzen sie ihren zweiten, normalerweise Pegel "LOW" führenden Ausgang 236A bzw. 237A auf Pegel "HIGH". Auf diese Weise wird ein Fehlerschaltsignal erzeugt, welches zunächst nur einen Ausfall einer Anhänger-Blinklampe registriert.
Selbstverständlich ist in jeder der Überwachungsschaltungen 236 und 237 eine Taktdehnstufe oder ein Zeitglied, das bzw. die verhindert, daß auch das Fehlerschaltsignal getaktet wird, vorgesehen, jedoch nicht eigens dargestellt.

Der Vollständigkeit halber sind in Figur 2 noch weitere rückwärtige Lampen 243 des Fahrzeugs, z. B. Rücklichtlampen und Bremslichter, dargestellt, die über ein Lampenkontrollgerät 238 betrieben werden. Dieses erzeugt bei Ausfall einer der angeschlossenen Lampen 243 in nicht näher dargestellter Weise ein an den Fahrzeugführer gerichtetes Signal. Ebenfalls nicht dargestellt sind die üblichen Schalter für die an das Lampenkontrollgerät 238 angeschlossenen Lampen.
An jeden der vier gezeigten Strompfade zwischen dem Lampenkontrollgerät 238 und einer der Lampen ist eine Zweigleitung zu einem hochohmigen Eingang eines von vier UND-Gattern 244 angeschlossen, über welche je ein Relais 239, 240, 241 und 242 mit je einem Schließkontakt aktivierbar ist.
Die elektrische Belastung des Lampenkontrollgeräts 238 durch die UND-Gatter 244 ist wegen deren hochohmiger Eingänge vernachlässigbar gegenüber den Lampen des Zugfahrzeugs 201. Der jeweils zweite Eingang jedes dieser vier UND-Gatter 244 ist wiederum mit dem Knoten 221 (Kreissymbole) elektrisch verbunden, so daß auch die Relais 239 bis 242 nur bei vorliegendem Erkennungssignal geschaltet werden können.
Die Schließkontakte dieser Relais sind einerseits unmittelbar an den Pluspol der Spannungsversorgung 2U angeschlossen, andererseits mit im Anhänger 202 vorgesehenen Lampen verbunden, wobei natürlich z. B. die Bremslichter 212 des Anhängers 202 über das Relais 239 - und die Erfassungseinrichtung 217 - simultan mit den Bremslichtern des Zugfahrzeugs geschaltet werden etc.
Das Lampenkontrollgerät 238 ist im vorderen Bereich des Zugfahrzeugs 201 angeordnet - es dient auch der Überwachung der nicht dargestellten Scheinwerfer- und Standlichtlampen -, während die Zweigleitungen in unmittelbarer Nähe der rückwärtigen Lampen von den jeweiligen Strompfaden abgezweigt werden können. Auch die Schalteinrichtung 220 ist im rückwärtigen Teil des Zugfahrzeugs 201 untergebracht, so daß auch die Blinklampen-Strompfade 226 und 230 erst in der Nähe der Blinklampen 208 und 209 zu deren Einschleifung unterbrochen werden müssen.

Schließlich sei noch bemerkt, daß natürlich auch der gleichzeitige Betrieb aller Blinklampen zum Warnblinken möglich ist; zu diesem Zweck werden in nicht dargestellter Weise die beiden Strompfade 226 und 230 gleichzeitig an den Blinktaktgeber 214 angeschlossen, der für diesen Betriebsmodus wiederum automatisch eine eigene Nennlast zugrundelegt.
Die Blinklampen 210 und 211 des angeschlossenen Anhängers 202 blinken dann selbstverständlich mit.

### Funktionsweise:

Im folgenden wird nun anhand eines **Fallbeispiels** "Ausfall der linken Anhänger-Blinklampe 211" die Wirkung des erwähnten Fehlerschaltsignals in der dargestellten, erfindungsgemäßen Vorrichtung erörtert.
Beim Einschalten des Wechselschalters 213 auf seinen linken Festkontakt wird die Zugfahrzeug-Blinklampe 209 zum Richtungsblinken eingeschaltet und wird das UND-Gatter 225 intermittierend durchgeschaltet, weil der Knoten 221 mit dem Erkennungssignal beaufschlagt ist und den logischen Pegel "HIGH" führt. Entsprechend pendelt der Ausgangspegel dieses UND-Gatters zwischen "LOW" und "HIGH", und das Relais 235 der Hilfsschalteinrichtung wird getaktet.
Die eingangsseitig getaktete Überwachungsschaltung 237 erfaßt nunmehr den erwähnten Lampenausfall. Sie setzt ihren mit dem einen Eingang des UND-Gatters 223 verbundenen zweiten Ausgang 237A auf Pegel "HIGH" und erzeugt damit ihr Fehlerschaltsignal. Da, wie bereits erwähnt, auch das UND-Gatter 223 mit dem anderen Eingang an den Knoten 221 angeschlossen ist, wird es beim vorliegenden Ausfall der einzuschaltenden Anhänger-Blinklampe 211 mittels des Fehlerschaltsignals durchgeschaltet; es setzt seinen Ausgangspegel auf "HIGH", so daß das nachgeschaltete Relais 232 aktiviert wird.
Dessen Öffnerkontakt 231 trennt daraufhin die linke hintere Zugfahrzeug-Blinklampe 209 von der elektrischen Last des Blinktaktgebers 214 ab und simuliert mit der Unterbrechung des Strompfades 230 deren Ausfall.
Der Blinktaktgeber 214 schaltet nun automatisch auf die höhere "Ausfallsignal-" Frequenz um; dies wird an der linken Kontrollampe 215 sichtbar.
Gleichzeitig mit dem Öffnen des Öffnerkontakts 231 wurde der Schließkontakt 233 des Relais 232 geschlossen, der, wie bereits erwähnt, über den Schließkontakt 235K des derzeit mit der höheren Frequenz des Blinktaktgebers 214 getakteten Relais 235 mit der Spannungsversorgung 2U verbunden ist.
Daher wird die Blinklampe 209 nunmehr "hilfsweise" über das Relais 235 und dessen Schließkontakt 235K intermittierend eingeschaltet, so daß sich für den Fahrzeugführer, der auf die schneller als gewohnt blinkende Kontrollampe aufmerksam wird, beim Nachschauen eindeutig der Ausfall der Anhänger-Blinklampe ergibt.

Da die Vorrichtung für beide (rechte und linke) Blinklampen identisch ausgeführt ist, erübrigt sich die Beschreibung eines Fallbeispiels "Ausfall der rechten Anhänger-Blinklampe 210".

Die Anordnungen
- UND-Gatter 224, Relais 234 mit Schließkontakt 234K und
- UND-Gatter 225, Relais 235 mit Schließkontakt 235K

sind jeweils als Hilfsschalteinrichtungen anzusehen, mit denen die Anhänger-Blinklampen und auch der intermittierende Betrieb der als ausgefallen simulierten Blinklampe über den jeweiligen Relais-Schließkontakt 229 bzw. 233 aufrechterhalten wird.

## Patentansprüche

1. Verfahren zur Überwachung von Fahrtrichtungsanzeige-Blinklampen eines Fahrzeuganhängers (Anhänger-Blinklampen), durch welches
- bei Ausfall einer Anhänger-Blinklampe durch signifikante Änderung der von einem Blinktaktgeber des Zugfahrzeugs bei Einschalten eines Fahrtrichtungssignalschalters erzeugten Taktfrequenz ein immanentes Ausfallsignal im Zugfahrzeug erzeugt wird, wenn die durch den Fahrtrichtungssignalschalter geschaltete elektrische Last des Blinktaktgebers von dessen Nennlast abweicht,
**gekennzeichnet durch**
- Betrieb der Anhänger-Blinklampen über eine mit der Frequenz des Blinktaktgebers getaktete Hilfsschalteinrichtung, wobei die Anhänger-Blinklampen Last einer getrennten Spannungsversorgung sind,
- Erzeugung eines Fehlerschaltsignals bei elektrischer Erfassung des Ausfalls einer der nicht an die elektrische Last des Blinktaktgebers angeschlossenen Blinklampen des elektrisch angeschlossenen Anhängers und eingeschaltetem Fahrtrichtungssignalschalter durch eine Anhänger-Blinklampen-Überwachungsschaltung,
- elektrische Abtrennung wenigstens einer Blinklampe des Zugfahrzeugs von der elektrischen Last des Blinktaktgebers bei vorliegendem Fehlerschaltsignal der Überwachungsschaltung
zur Simulation einer Abweichung der elektrischen Last des Blinktaktgebers von der Nennlast,
- Hilfsbetrieb der abgetrennten Blinklampe des Zugfahrzeugs mittels der Hilfsschalteinrichtung.

2. Vorrichtung zur Überwachung von Fahrtrichtungsanzeige-Blinklampen eines Fahrzeuganhängers (Anhänger-Blinklampen) in einem Zugfahrzeug, enthaltend
- einen Blinktaktgeber zur Erzeugung von festen, in Abhängigkeit von seiner über einen Fahrtrichtungssignalschalter anschaltbaren, wenigstens durch die Blinklampen des Zugfahrzeugs gebildeten elektrischen Last umschaltbaren Taktfrequenzen,
- eine Erfassungseinrichtung, die erfaßt, ob ein Anhänger elektrisch angeschlossen ist oder nicht, und ein entsprechendes elektrisches Erkennungssignal erzeugt,
- eine durch das elektrische Erkennungssignal steuerbare Schalteinrichtung zur automatischen Steuerung des Blinktaktgebers im Sinne der Umschaltung auf eine andere Taktfrequenz bei Ausfall einer der angeschlossenen Anhänger-Blinklampen,
wobei durch diese Umschaltung ein immanentes Ausfallsignal einer Anzeigevorrichtung erzeugt wird,
insbesondere zur Durchführung des Verfahrens nach Anspruch 1, **gekennzeichnet durch**
- Anschluß der Anhänger-Blinklampen (210 bzw. 211) über eine getaktete, mittels des Fahrtrichtungssignalschalters (213) bei vorliegendem Erkennungssignal (221) einschaltbare Hilfsschalteinrichtung (224, 234, 234K bzw. 225, 235, 235K) der Schalteinrichtung (220) an eine getrennte Spannungsversorgung (2U),
- eine Überwachungsschaltung (236 bzw. 237) der Schalteinrichtung (220) für die Blinklampen (210 bzw. 211) des Anhängers (202) zur Erfassung eines Ausfalls einer dieser Blinklampen bei vorliegendem Erkennungssignal (221) und zur Erzeugung eines entsprechenden Fehlerschaltsignals,
- elektrische Abtrennung (227 bzw. 231) wenigstens einer gleichzeitig mit der ausgefallenen Anhänger-Blinklampe (210 bzw. 211) eingeschalteten Blinklampe (208 bzw. 209) des Zugfahrzeugs (201) von der elektrischen Last des Blinktaktgebers (214) durch die Schalteinrichtung (220) bei Einschaltung des Fahrtrichtungssignalschalters (213) im Zugfahrzeug (201) und vorliegendem Fehlerschaltsignal der entsprechenden Überwachungsschaltung (236 bzw. 237),
wodurch der Blinktaktgeber (214) zur Umschaltung der von ihm erzeugten Taktfrequenz gesteuert wird,
und
- elektrischer Anschluß (229 bzw. 233) der jeweils von der Last des Blinktaktgebers (214) abgetrennten Blinklampe (208 bzw. 209) des Zugfahrzeugs (201) durch die Schalteinrichtung (220) über die Hilfsschalteinrichtung (224, 234, 234K bzw. 225, 235, 235K) an die getrennte Spannungsversorgung (2U).

3. Vorrichtung nach Anspruch 2,
**gekennzeichnet durch**
Taktung der Hilfsschalteinrichtung (224, 234, 234K bzw. 225, 235, 235K) unmittelbar durch den Blinktaktgeber (214) bei vorliegendem Erkennungssignal.

4. Vorrichtung nach Anspruch 3,
**gekennzeichnet durch**
- einen an einen die Blinklampenlast des Blinktaktgebers führenden Strompfad (226 bzw. 230) angeschlossenen hochohmigen Eingang der Hilfsschalteinrichtung (224, 234, 234K bzw. 225, 235, 235K),
- einen mit dem Erkennungssignal (Knoten 221) beaufschlagbaren weiteren Eingang der Hilfsschalteinrichtung (224, 234, 234K bzw. 225, 235, 235K),
- mit den Eingängen der Hilfsschalteinrichtung verbundene Bauelemente (224 bzw. 225) zur logischen Verknüpfung des Einschaltzustandes eines der Blinklampenstrompfade (226 bzw. 230) mit dem Erkennungssignal.

5. Vorrichtung nach Anspruch 4,
**gekennzeichnet durch**
- Ausführung der Bauelemente (224 bzw. 225) als UND-Gatter,
- je ein an den Ausgang eines UND-Gatters (224 bzw. 225) angeschlossenes und über diesen schaltbares Relais (234 bzw. 235) mit einem Schließkontakt (234K bzw. 235K), der zwischen der getrennten Spannungsversorgung (2U) und einer Anhänger-Blinklampe (210 bzw. 211) eingeschleift ist.

6. Vorrichtung nach Anspruch 5,
**gekennzeichnet durch**
Anordnung der Überwachungsschaltung (236, 237) zwischen den Schließkontakten (234K bzw. 235K) und den Anhänger-Blinklampen (210 bzw. 211).

7. Vorrichtung nach Anspruch 2 oder 6,
**gekennzeichnet durch**
- einen bei vorliegendem Erkennungssignal und vorliegendem Fehlerschaltsignal schaltbaren, im Strompfad (226 bzw. 230) zwischen dem Blinktaktgeber (214) und einer der Blinklampen (208 bzw. 209) des Zugfahrzeugs (201) liegenden Ruhe- bzw. Öffnerkontakt (227 bzw. 231) und
- einen gleichzeitig mit dem Öffnerkontakt (227 bzw. 231) schaltbaren, einerseits mit der Hilfsschalteinrichtung, andererseits mit der jeweiligen Blinklampe (208 bzw. 209) des Zugfahrzeugs (201) verbundenen Schließkontakt (229 bzw. 233).

8. Vorrichtung nach Anspruch 7,
**gekennzeichnet durch**
- Bauelemente (222, 223) zur logischen Verknüpfung des Erkennungssignals (221) mit dem Fehlerschaltsignal,
- durch die Bauelemente (222 bzw. 223) steuerbare Relais (228 bzw. 232) zur Betätigung je eines der Öffnerkontakte (227 bzw. 231) und je eines der Schließkontakts (229 bzw. 233).

9. Vorrichtung nach Anspruch 8,
**gekennzeichnet durch**
- Ausführung der Bauelemente (224 bzw. 225) als UND-Gatter.

10. Vorrichtung nach den Ansprüchen 5 und 8 oder 5 und 9,
**gekennzeichnet durch**
Reihenschaltung der Schließkontakte (229 bzw. 233) der Relais (228 bzw. 232) jeweils mit den Schließkontakten (234K bzw. 235K) der Relais (234 bzw. 235) der Hilfsschalteinrichtung.

11. Vorrichtung nach Anspruch 7 oder 8 oder 10,
**gekennzeichnet durch**
Zusammenfassung der jeweils gleichzeitig schaltbaren Öffner- und Schließkontakte (227 und 229 bzw. 231 und 233) zu je einem einzelnen Wechslerkontakt.

## Claims

1. Method for monitoring direction indicator lights of a vehicle trailer (trailer indicator lights), by means of which
- on the failure of a trailer indicator light an imminent failure signal is generated in the towing vehicle by significant change in the pulse frequency generated by a flasher pulse generator of the towing vehicle on the switching on of a direction signalling switch when the electrical load, connected through the direction signalling switch, of the flasher pulse generator deviates from its nominal load,
characterised by
- operation of the trailer indicator lights via an auxiliary switching device clocked with the frequency of the flasher pulse generator, the trailer indicator lights being the load of a separate voltage supply,
- generation of a fault switching signal by a trailer indicator lights monitoring circuit on the electrical detection of the failure of one of the indicator lights, not connected to the electrical load of the flasher pulse generator, of the electrically connected trailer and with the direction signalling switch switched on,
- electrical isolation of at least one indicator light of the towing vehicle from the electrical load of the flasher pulse generator in the presence of the fault switching signal of the monitoring circuit for the purpose of simulating a deviation of the electrical load of the flasher pulse generator from the nominal load,
- auxiliary operation of the isolated indicator lamp of the towing vehicle by means of the auxiliary switching device.

2. Device for monitoring direction indicator lights of a vehicle trailer (trailer indicator lights) in a towing vehicle, containing
- a flasher pulse generator for generating fixed pulse frequencies which can be changed over as a function of its electrical load which can be connected via a direction signalling switch and is formed at least by the indicator lights of the towing vehicle,
- a detection device which detects whether a trailer is electrically connected or not and generates a corresponding electrical detection signal,
- a switching device, which is controllable by the electrical detection signal, for the automatic control of the flasher pulse generator in order to change it over to another pulse frequency on the failure of one of the connected trailer indicator lights,
this change-over generating an imminent failure signal of a display device,
in particular for carrying out the method according to Claim 1,
characterised by
- connection of the trailer indicator lights (210 and 211 respectively) via a clocked auxiliary switching device (224, 234, 234K and 225, 235, 235K, respectively), which can be switched on by means of the direction signalling switch (213) in the presence of the detection signal (221), of the switching device (220) to a separate voltage supply (2U),
- a monitoring circuit (236 and 237, respectively) of the switching device (220) for the indicator lights (210 and 211, respectively) of the trailer (202) for detecting a failure of one of these indicator lights in the presence of the detection signal (221) and for generating a corresponding fault switching signal,
- electrical isolation (227 and 231, respectively) of at least one indicator light (208 and 209, respectively), switched on at the same time as the failed trailer indicator light (210 and 211, respectively), of the towing vehicle (201) from the electrical load of the flasher pulse generator (214) by the switching device (220) on the switching on of the direction signalling switch (213) in the towing vehicle (201) and in the presence of the fault switching signal of the corresponding monitoring circuit (236 and 237, respectively),
as a result of which the flasher pulse generator (214) is controlled so as to change over the pulse frequency generated by it,
and
- electrical connection (229 and 233, respectively) of the indicator light (208 and 209, respectively), isolated in each case from the load of the flasher pulse generator (214), of the towing vehicle (201) to the separate voltage supply (2U) by the switching device (220) via the auxiliary switching device (224, 234, 234K and 225, 235, 235K, respectively).

3. Device according to Claim 2,
characterised by
pulsing of the auxiliary switching device (224, 234, 234K and 225, 235, 235K, respectively) directly by the flasher pulse generator (214) in the presence of the detection signal.

4. Device according to Claim 3,
characterised by
- a high-impedance input of the auxiliary switching device (224, 234, 234K and 225, 235, 235K, respectively) connected to a current path (226 and 230, respectively) conducting the indicator light load of the flasher pulse generator,
- a further input of the auxiliary switching device (224, 234, 234K and 225, 235, 235K, respectively) which can be fed with the detection signal (node 221),
- components (224 and 225, respectively) for the logical connection of the switch-on state of one of the indicator light current paths (226 and 230, respectively) to the detection signal, the said components being connected to the inputs of the auxiliary switching device.

5. Device according to Claim 4,
characterised by
- design of the components (224 and 225, respectively) as AND gates,
- in each case one relay (234 and 235, respectively), connected to the output of an AND gate (224 and 225, respectively) and switchable via the latter, with a make contact (234K and 235K, respectively) which is looped in between the separate voltage supply (2U) and a trailer indicator light (210 and 211, respectively).

6. Device according to Claim 5,
characterised by
arrangement of the monitoring circuit (236, 237) between the make contacts (234K and 235K, respectively) and the trailer indicator lights (210 and 211, respectively).

7. Device according to Claim 2 or 6,
characterised by
- a normally closed or break contact (227 and 231, respectively) which can be switched in the presence of the detection signal and in the presence of the fault switching signal and is situated in the current path (226 and 230, respectively) between the flasher pulse generator (214) and one of the indicator lights (208 and 209, respectively) of the towing vehicle (201) and
- a make contact (229 and 233, respectively) which can be switched at the same time as the break contact (227 and 231, respectively) and is connected on the one hand to the auxiliary switching device and on the other hand to the respective indicator light (208 and 209, respectively) of the towing vehicle (201).

8. Device according to Claim 7,
characterised by
- components (222, 223) for the logical connection of the detection signal (221) to the fault switching signal,
- relays (228 and 232, respectively), which can be controlled by the components (222 and 223, respectively), for actuating in each case one of the break contacts (227 and 231, respectively) and in each case one of the make contacts (229 and 233, respectively).

9. Device according to Claim 8,
characterised by
- design of the components (224 and 225, respectively) as AND gates.

10. Device according to Claims 5 and 8 or 5 and 9,
characterised by
series connection of the make contacts (229 and 233, respectively) of the relays (228 and 232, respectively) in each case to the make contacts (234K and 235K, respectively) of the relays (234 and 235, respectively) of the auxiliary switching device.

11. Device according to Claim 7 or 8 or 10,
characterised by
combination of the respective simultaneously switchable break contacts and make contacts (227 and 229 and 231 and 233, respectively) to form in each case a single three-way contact.

## Revendications

1. Procédé de surveillance des lampes clignotantes d'indication de direction pour remorque de véhicule (lampes clignotantes de remorque) par lequel
- en cas de défaillance d'une lampe clignotante de la remorque, une modification notable de la fréquence de rythme qui est produite par un générateur de rythme de clignotement du véhicule tracteur lors de la mise à l'état actif d'un commutateur de signal d'indication de direction engendre dans le véhicule tracteur un signal de défaillance existante lorsque la charge électrique du générateur de rythme de clignotement qui est mis en circuit par le commutateur de signal d'indication de direction s'écarte de la charge nominale de ce générateur,,
caractérisé en ce que
- les lampes clignotantes de la remorque sont commandées à l'aide d'un dispositif de commutation auxiliaire rythmé avec la fréquence du générateur de rythme de clignotement, les lampes clignotantes de la remorque constituant la charge d'une source d'alimentation distincte,
- un circuit de surveillance des lampes clignotantes de la remorque produit un signal de commutation de défaut lorsqu'il détecte électriquement la défaillance d'une des lampes clignotantes de la remorque raccordée électriquement qui ne sont pas connectées à la charge électrique du générateur de rythme de clignotement, si le commutateur de signal d'indication de direction est en position active,
- au moins une lampe clignotante du véhicule tracteur est isolée électriquement de la charge électrique du générateur de rythme de clignotement en réponse à un signal de commutation de défaut émis par le circuit de surveillance,
pour la simulation d'un écart de la charge électrique du générateur de rythme de clignotement par rapport à la charge nominale,
- le dispositif de commutation auxiliaire commande auxiliairement la lampe clignotante du véhicule tracteur gui est ainsi isolée.

2. Dispositif de surveillance des lampes clignotantes d'indication de direction pour remorque de véhicule (lampes clignotantes de remorque) installé dans un véhicule tracteur, comprenant
- un générateur de rythme de clignotement destiné à produire des fréquences de rythme fixes, qui peuvent être modifiées en fonction de sa charge électrique, constituée au moins par les lampes clignotantes du véhicule tracteur et qui peut être connectée par l'intermédiaire d'un commutateur de signal d'indication de direction ;
- un dispositif détecteur qui vérifie si une remorque est connectée électriquement ou non et produit un signal électrique de reconnaissance correspondant,
- un dispositif de commutation commandé par le signal électrique de reconnaissance, destiné à commander automatiquement le générateur de rythme de clignotement en le commutant sur une autre fréquence de rythme en réponse à la défaillance d'une des lampes clignotantes de la remorque connectées,
cette commutation produisant un signal de défaillance existante d'un dispositif indicateur,
ce dispositif étant notamment destiné à la mise en oeuvre du procédé selon la revendication 1,
caractérisé en ce que
- les lampes clignotantes (210 ou 211) de la remorque sont connectées à une alimentation en tension distincte (2U) par l'intermédiaire d'un dispositif de commutation auxiliaire rythmé (224, 234, 234K ou 225, 235, 235K) du dispositif de commutation (220), qui peut être mis en position active au moyen du commutateur (213) de signal d'indication de direction en présence d'un signal de reconnaissance (221),
- il est prévu un circuit de surveillance (236 ou 237) appartenant au dispositif de commutation (220) commandant les lampes clignotantes (210 ou 211) de la remorque (202) pour détecter une défaillance d'une de ces lampes clignotantes en présence d'un signal de reconnaissance (221) et pour produire un signal de commutation de défaut correspondant,
- au moins une lampe clignotante (208 ou 209) du véhicule tracteur (201), mise en circuit simultanément avec la lampe clignotante (210 ou 211) de la remorque qui est défaillante, est isolée électriquement (227 ou 231) de la charge électrique du générateur de rythme de clignotement (214), par le dispositif de commutation (220) lors de la mise en position active du commutateur (213) de signal d'indication de direction installé dans le véhicule tracteur (201), et en présence du signal de commutation de défaut émis par le dispositif de surveillance correspondant (236 ou 237),
de sorte que le générateur de rythme de clignotement (114) est commandé pour changer la fréquence de rythme produite par ce générateur,
et
- la lampe clignotante (208 ou 209) du véhicule tracteur (201) qui est isolée de la charge du générateur de rythme de clignotement (214) est connectée électriquement (229 ou 233) à l'alimentation en tension distincte (2U) par le dispositif de commutation (220) par l'intermédiaire du dispositif de commutation auxiliaire (224, 234, 234K ou 225, 235, 235K).

3. Dispositif selon la revendication 2,
caractérisé en ce que
- le dispositif de commutation auxiliaire (224, 234, 234K ou 225, 235, 235K) est rythmé directement par le générateur de rythme de clignotement (214) en présence d'un signal de reconnaissance.

4. Dispositif selon la revendication 3,
caractérisé en ce que
- une entrée à haute valeur ohmique du dispositif de commutation auxiliaire (224, 234, 234K ou 225, 235, 235K) est connectée à un trajet conducteur (226 ou 230) qui conduit la charge de lampes clignotantes du générateur de rythme de clignotement,
- une autre entrée du dispositif de commutation auxiliaire (224, 234, 234K ou 225, 235, 235K) peut recevoir le signal de reconnaissance (noeud 221),
- des composants (224 ou 225) servant à effectuer la combinaison logique de l'état d'entrée de l'un des trajets conducteurs des lampes clignotantes (226 ou 230) avec le signal de reconnaissance sont connectés aux entrées du dispositif de commutation auxiliaire.

5. Dispositif selon la revendication 4,
caractérisé en ce que
- les composants (224 et 225) sont constitués par des portes ET,
- à chacune des sorties d'une porte ET (224 ou 225), est connecté un relais (234 ou 235) pouvant être commandé par cette porte, et qui comprend un contact de fermeture (234K ou 235K) qui est intercalé entre l'alimentation en tension distincte (2U) et une lampe clignotante (210 ou 211) de la remorque.

6. Dispositif selon la revendication 5,
caractérisé en ce que
- le dispositif de surveillance (236, 237) est intercalé entre les contacts de fermetur (234K ou 235K) et les lampes clignotantes (210 ou 211) de la remorque.

7. Dispositif selon la revendication 2 ou 6,
caractérisé en ce que
- un contact repos ou d'ouverture (227 et 231) intercalé dans le trajet conducteur (226 ou 210) reliant le générateur de rythme de clignotement (214) à une des lampes clignotantes (208 ou 209) du véhicule tracteur (201), ce contact pouvant être manoeuvré en présence du signal de reconnaissance et en présence du signal de commutation de défaut, et
- un contact de fermeture (229 ou 233), qui peut être manoeuvré simultanément avec le contact d'ouverture (227 ou 231) est connecté, d'une part, au dispositif de commutation auxiliaire et, d'autre part, à la lampe clignotante correspondante (208 ou 209) du véhicule tracteur (201).

8. Dispositif selon la revendication 7,
caractérisé par
- des composants (222, 223) servant à effectuer la combinaison logique du signal de reconnaissance (221) avec le signal de commutation de défaut,
- des relais (228 ou 232) pouvant être commandés par les composants (222 ou 223) pour actionner chacun l'un des contacts d'ouverture (227 ou 231) ou d'un des contacts de fermeture (229 ou 233).

9. Dispositif selon la revendication 8,
caractérisé en ce que
- les composants (224 et 225) sont constitués par des portes ET.

10. Dispositif selon les revendications 5 et 8 ou 5 et 9,
caractérisé en ce que
- les contacts de fermeture (222 ou 233) des relais (228 ou 232) sont connectés en série avec les contacts de fermeture (234K ou 235K) des relais (234 ou 235) du dispositif de commutation auxiliaire.

11. Dispositif selon la revendication 7 ou 8 ou 10,
caractérisé en ce que
- chaque paire de contacts d'ouverture et de fermeture (227 et 229 ou 231 et 233) qui peuvent être manoeuvrés simultanément est réunie à un unique contact d'inverseur indépendant.
